# EUROPEAN PATENT APPLICATION

(11) **EP 0 896 054 A2**
(43) Date of publication of application: **10.02.1999**
(21) Application number: 98112234.4
(22) Date of filing: 02.07.1998
(51) Int. Cl.: C12G 3/04

(54) **Rum-Punch**

(30) Priority: 08.07.1997 DE 19729030
(71) Applicant: Taylor, Alfred, 97318 Kitzingen (DE)
(72) Inventor: Taylor, Alfred, 97318 Kitzingen (DE)
(74) Representative: Küchler, Stefan

(57) **Abstract**

The invention relates to a rum punch with the following ingredients:

| | | |
|---|---|---|
| a) | 20-25 %-vol. | rum; |
| b) | 5-10 %-vol. | fruit liqueur |
| c) | approx. 3 %-vol. | grenadine |
| d) | approx. 3 %-vol. | lemon juice (optional); |
| e) | 15-25 %-vol | fruit nectar, |
| f) | rest, | orange nectar. |

## Description

The invention relates to a rum punch.

A punch is a (hot) drink originally of five ingredients: rum or arrack, tea, water, lemon and sugar. Currently, punch drinks containing wine and/or fruit juices are commercially available. The alcohol content is generally more than 30 %-vol. and is therefore relatively high. The rum providing the alcohol in this case is a brandy composed of a mash of sugarcane melasses or sugar syrup with macerated sugarcane, sugar juice, soured 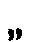 Dunder" and special yeasts. This rum obtained from sugar raw materials, although it blends in the conventional punch drink with the tea and the sugar, in modern drink mixtures, in particular with the addition of fruit juices, the rum aroma very seldom blends with the fruit juice flavour to form a rounded flavour orientation. Due to the clash of flavours, often too much rum is used, so that the alcohol content of a rum fruit punch is relatively high.

From these disadvantages of conventional rum fruit punch drinks results the problem initiating the invention of how to permit, by a suitable measure, a reduction in the alcohol content without impairing the flavour.

To solve this problem, the invention proposes the following recipe for a rum punch:

| | | |
|---|---|---|
| a) | 20-25 %-vol. | rum; |
| b) | 5-10 %-vol. | fruit liqueur; |
| c) | approx. 3%-vol. | grenadine; |
| d) | approx. 3 %-vol. | lemon juice (optional); |
| e) | 15-25 %-vol. | fruit nectar; |
| f) | rest, | orange nectar. |

Here, in a first step, the rum content is reduced in favour of a fruit liqueur, in which a fruity aroma is inherent. On the other hand, instead of fruit juice, fruit and orange nectar are used, which is manufactured from fruit juice with the addition of water and sugar, concentrated fruit juice, fruit pulp and concentrated fruit pulp. In this case by the greater sugar content compared with commercial fruit juice, the flavour is brought closer to the rum aroma. Due to these steps, a rounded flavour is obtained, in which the taste difference between the rum and the fruit components is reduced by the use of fruit nectar instead of fruit juice and is bridged by the addition of fruit liqueur. Due to the reduced alcohol content of a fruit liqueur compared to standard commercial rum, at the same time as improving the flavour, the alcohol content is reduced, which is beneficial to the health of a punch drinker.

The invention further proposes that a dark rum, in particular real Jamaican rum with approx. 40 %-.vol. is used. A dark rum with its light-brown colour, which can be reinforced by sugar colorant, releases the unmistakable aroma of rum at its most intense, furthermore real Jamaica rum in no way undergoes a change which affects its flavour and therefore it blends excellently with the sugar ingredients in the fruit nectars.

It has been found advantageous that a fruit liqueur with approx. 20 %-vol. alcohol is used, so that the alcohol content on the whole can be reduced.

Particular advantages can be obtained, if a fruit liqueur is used which is the same fruit as the fruit nectar. Consequently, a further blending of the punch according to the invention is effected in that the flavour orientation is very uniform. The orange nectar used in addition to the fruit nectar on the one hand serves to generate a typical rum/fruit punch flavour and on the other hand to give colour.

The fruit whose flavour is preferred for the liqueur and the nectar is apricot, since the orange taste blends best with this.

To increase the shelf life, preservatives can be added, but standard commercial bottled nectars often already countain them.

The rum punch according to the invention is inclined to darken somewhat if stored for more than six months. In order to avoid this effect the invention further proposes that to stabilise the colour sulphur is added.

Finally, it is part of the teaching of the invention that the rum punch according to the invention is stored in clear glass bottles. This step underlines the signalling generated by the orange to light red colouring of the rum punch according to the invention, and makes the punch drinker's mouth water just to look at the drink in the bottle.

Further details, features and advantages on the basis of the invention will appear from the following description of a preferred recipe according to the invention.

In this case, a 0,7 l bottle of the rum punch according to the invention contains the following quantities:

| | | |
|---|---|---|
| a) | 16 cc | 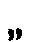 Captn Comark" real Jamaica rum (40 %-vol. alcohol) |
| b) | 6 cc | 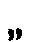 Exquisit Apricot Liqueur" (20 %-vol. alcohol) |
| c) | 2 cc | 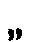 Riemerschmid" grenadine |
| d) | 2 cc | lemon juice |
| e) | 14 cc | apricot-orange nectar |
| f) | 30 cc | orange nectar. |

In this case, the Jamaica rum supplies the majority of the alcohol content and the typical rum flavour, the apricot liqueur creates a rounded transition to the apricot-orange liqueur, which in turn combines excellently with the orange nectar.

The grenadine is a syrup which gives the rum punch according to the invention both its sweetness and its colour.

The lemon juice is to precent a hangover.

Due to the use of nectar, the fruit composition is reduced, and therefore the shelf life is increased without refrigeration to at least 4-6 months. Filtering is not necessary.

By the use of standard commercial fruit nectars, the preservatives contained therein also have an advantageous effect on the drink according to the invention. Furthermore, fruit nectar has a fruit flavour which is reduced in intensity in favour of the sugar content, which contributes to a rounding of the flavour note.

Unlike the conventional rum punch drinks which use a large quantity of rum and often have a somewhat dull flavour, the rum punch according to the invention has a refreshing taste and can therefore also be drunk chilled as a reviving, refreshing drink.

## Claims

1. Rum punch, characterised by the following ingredients:
| | | |
|---|---|---|
| a) | 20-25 %-vol. | rum; |
| b) | 5-10 %-vol. | fruit liqueur |
| c) | approx. 3 %-vol. | grenadine |
| d) | approx. 3 %-vol. | lemon juice (optional); |
| e) | 15-25 %-vol | fruit nectar, |
| f) | rest, | orange nectar. |

2. Rum punch according to claim 1, characterised in that a dark rum, in particular real Jamaica rum with approx. 40%-vol. alcohol is used.

3. Rum punch according to claim 1 or 2, characterised in that a fruit liqueur with approx. 20 %-vol. alcohol is used.

4. Rum punch according to one of the proceding claims, characterised in that a fruit liqueur (ingredient) of the same fruit is used as the fruit nectar (ingredient e)).

5. Rum punch according to claim 4, characterised in that apricot liqueur and apricot nectar are used.

6. Rum punch according to one of the preceding claims, characterised in that in order to improve the shelf life, preservatives are added.

7. Rum punch according to one of the preceding claims, characterised in that for colour stabilisation sulphur is added.

8. Rum punch according to one of the preceding claims, characterised in that it is contained in clear glass bottles.
